(19) Europäisches Patentamt / European Patent Office / Office européen des brevets

(11) **EP 4 587 897 B1**

(12) **FASCICULE DE BREVET EUROPEEN**

(45) Date de publication et mention
de la délivrance du brevet:
**17.06.2026 Bulletin 2026/25**

(21) Numéro de dépôt: **23772553.6**

(22) Date de dépôt: **30.08.2023**

(51) Classification Internationale des Brevets (IPC):
**G05D 1/243** (2024.01)   **G05D 1/43** (2024.01)
**G05D 1/633** (2024.01)   **G08G 5/21** (2025.01)
**G08G 5/53** (2025.01)   **G08G 5/55** (2025.01)
**G08G 5/80** (2025.01)   **G05D 109/20** (2024.01)
**G05D 111/10** (2024.01)

(52) Classification Coopérative des Brevets (CPC):
**G08G 5/53; G05D 1/243; G05D 1/43; G05D 1/633;
G08G 5/21; G08G 5/55; G08G 5/80;** G05D 2109/20;
G05D 2111/10; G08G 5/57

(86) Numéro de dépôt international:
**PCT/FR2023/051316**

(87) Numéro de publication internationale:
**WO 2024/056956 (21.03.2024 Gazette 2024/12)**

(54) **PROCÉDÉ DE CONTRÔLE DE LA TRAJECTOIRE D'UN AÉRONEF**

VERFAHREN ZUR STEUERUNG DER FLUGBAHN EINES FLUGZEUGS

METHOD FOR CONTROLLING THE TRAJECTORY OF AN AIRCRAFT

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **16.09.2022 FR 2209378**

(43) Date de publication de la demande:
**23.07.2025 Bulletin 2025/30**

(73) Titulaire: **Safran Electronics & Defense
75015 Paris (FR)**

(72) Inventeurs:
• **MALTESE, Dominique
77550 MOISSY-CRAMAYEL (FR)**
• **FARJON, Julien
77550 MOISSY-CRAMAYEL (FR)**

(74) Mandataire: **Cabinet Camus Lebkiri
25 rue de Maubeuge
75009 Paris (FR)**

(56) Documents cités:
**EP-A1- 2 159 779     FR-A1- 3 020 892
FR-A1- 3 094 081**

• **MALTESE DOMINIQUE ET AL: "Detect and avoid
function for UAVs: presentation of an EO/IR
sensor solution", SPIE PROCEEDINGS;
[PROCEEDINGS OF SPIE ISSN 0277-786X], SPIE,
US, vol. 11407, 15 May 2020 (2020-05-15), pages
1140713 - 1140713, XP060132847, ISBN:
978-1-5106-3673-6, DOI: 10.1117/12.2559461**
• **RODRIGUEZ SALAZAR LEOPOLDO ET AL: "A
Novel System for Non-Cooperative UAV Sense-
And-Avoid", PROCEEDINGS OF EUROPEAN
NAVIGATION CONFERENCE. 2013, 30 April 2013
(2013-04-30), XP093087015, Retrieved from the
Internet <URL:https://d1wqtxts1xzle7.cloudfront.
net/44900996/A_Novel_System_for_Non-Coope
rative_UAV_S20160419-31476-rub5yw-libre.pdf?
1461109801=&response-content-disposition=in
line;+filename=A_Novel_System_for_Non_Coo
perative_UAV_S.pdf&Expires=1695914357&Si
gnature=ee8MKtLT-aJGg7tIV2D
Jo2blZQxN0HjV94b2tjOlJHoXCJjyI> [retrieved
on 20230928]**

**Description**

**DOMAINE TECHNIQUE DE L'INVENTION**

Le domaine technique de l'invention est celui de la navigation des objets volants et en particulier des aéronefs.
La présente invention concerne un procédé de contrôle de la trajectoire d'un aéronef , et en particulier un procédé de contrôle de la trajectoire par estimation de vitesse radiale basé sur un filtre de Kalman étendu avec pour mesure en entrée une distance entre l'aéronef et l'obstacle et un « temps avant collision » entre l'aéronef et l'obstacle.

**ARRIERE-PLAN TECHNOLOGIQUE DE L'INVENTION**

Dans la navigation d'aéronefs, la fonction de « detect and avoid » (pour « détecter et éviter ») est réalisée en se basant sur des mesures de distance entre l'aéronef et un obstacle à éviter sur la trajectoire de l'aéronef.
Une telle fonction permet de percevoir ou de détecter (« detect ») un futur conflit de trafic aérien pouvant mener à une collision et de prendre les mesures appropriées pour éviter la survenance dudit conflit (« avoid »).
Des systèmes actifs existent, tels que des radars à extrêmement haute fréquence (en anglais « Millimeter-Wave radar » ou « MMW radar ») ou des radars laser (en anglais « laser radar » ou « LADAR »). Ces systèmes actifs sont encombrants et chers, ce qui n'est pas souhaitable pour l'embarquement dans des aéronefs légers tels que des drones ou dans des aéronefs pour lesquels on cherche à réduire la masse comme les avions de tourisme.
Des systèmes de détection d'obstacles passifs ont donc été développés, en utilisant par exemple des capteurs EO/IR (pour « Electro-Optique/Infra-Rouge »). Parmi les systèmes passifs, certains permettent d'obtenir une distance entre l'aéronef et l'obstacle, tandis que d'autres permettent d'obtenir un « temps avant collision » entre l'aéronef et l'obstacle. Le « temps avant collision », aussi abrégé « TTC » de l'anglais « Time-To-Collision », porte aussi les noms, en fonction du contexte, de « temps de trajectoire », abrégé « TTG » de l'anglais « Time-To-Go », et « Temps avant arrivée », abrégé « TTA » pour « Time-To-Arrival ».
Le « temps avant collision » est défini comme le temps restant avant qu'une collision entre l'aéronef et l'obstacle ne se produise si leurs deux trajectoires et vitesses ne sont pas modifiées.
La distance peut par exemple être obtenue par :

- Une estimation par intelligence artificielle par analyse d'images, comme décrit dans FR3094081A1 « Procédé d'estimation passive du temps avant collision pour un aéronef ou de tout objet volant pouvant être guidé, procédé de navigation associé », dans lequel le temps avant collision est estimé par analyse d'images provenant d'une caméra embarquée, l'analyse étant réalisée par un réseau de neurones entraîné pour estimer le temps avant collision à partir de la taille de l'obstacle en pixels. La distance peut être estimée à chaque image. Un inconvénient de cette technique est que le temps avant collision et la distance entre l'aéronef et l'obstacle obtenus sont imprécis.

- de la télémétrie passive, aussi appelée "passive ranging" en anglais. Par exemple, une méthode de type « azimétrie » peut être utilisée, telle que présentée dans [« Utilization of modified polar coordinates for bearings-only tracking » - V.J. AIDALA, S.E. HAMMEL, IEEE, 2007, pp.741-752, doi: 10.1109/9780470544198.ch74]. L'azimétrie reconstitue la trajectoire de l'obstacle à partir de mesures d'azimut réalisées par l'aéronef.

- une utilisation de banques de filtres RPEKF (de l'anglais « range-parameterized extended Kalman filter » pour « filtre de Kalman étendu paramétré en distance » en français) initialisés sur des distances a priori, tel que présenté dans [« Recursive Bayesian Estimation - Bearings-only Applications » - R. KARLSSON, F. GUSTAFSSON, IEEE, Novembre 2005, DOI:10.1049/ip-rsn:20045073]. Le RPEKF peut donner de bons résultats si la distance est observable, car l'obstacle n'est suivi qu'en angulaire, et si les métadonnées sont de très bonnes qualités, car on veut alors obtenir une information en trois dimensions en n'ayant que deux informations angulaires et en observant la trajectoire de l'obstacle projetée dans le plan image du senseur optronique.

La précision en vitesse radiale est une exigence système importante pour intégrer un aéronef dans le trafic aérien. Pour avoir une bonne précision en vitesse radiale, c'est-à-dire une précision en vitesse radiale suffisante pour avoir une fonction « détecter et éviter » efficace dans un trafic aérien, il faut pouvoir extraire la distance et le temps avant collision avec une qualité suffisante. Le temps avant collision est généralement calculé en observant soit :

- La variation du signal émis par l'obstacle, le signal augmentant globalement lorsque la cible se rapproche (exemple dans les bandes infrarouges),

- la variation de la taille apparente de l'obstacle entre images, par exemple en nombre de pixels, qui augmente lorsque la cible se rapproche.

Connaissant le temps avant collision, il est possible de déduire la vitesse radiale, mais avec une précision telle qu'elle exige d'augmenter les performances en distance pour avoir une bonne qualité de vitesse radiale.

L'exigence d'erreur sur la vitesse radiale est la plus critique car si celle-ci est déterminée via l'estimation de distance, l'erreur de distance doit alors être réduite dans des niveaux pouvant être difficilement atteignables pour les technologies passives EO/IR.

Les documents suivants sont connus de l'état de la technique :

- EP2159779A1 intitulé « Using image sensor and tracking filter time-to-go to avoid mid-air collisions » ; et

- Dominique Maltese and Julien Farjon « Detect and avoid function for UAVs: presentation of an EO/IR sensor solution », Proc. SPIE 11407, Infrared Technology and Applications XLVI, 1140713 (15 May 2020); https://doi.org/ 10.1117/12.2559461.

Il existe donc un besoin d'obtenir, dans un aéronef implémentant un système de mesure passif, une meilleure estimation de vitesse radiale d'un obstacle que l'état de l'art.

## RESUME DE L'INVENTION

L'invention offre une solution aux problèmes évoqués précédemment, en permettant une meilleure estimation de vitesse radiale sans nécessiter de mesures de distance de meilleure qualité.

Un aspect de l'invention concerne ainsi un procédé de contrôle d'un aéronef comprenant au moins une caméra et un système de guidage configuré pour indiquer une trajectoire à l'aéronef, le procédé étant mis en œuvre par ordinateur et étant caractérisé en ce qu'il comprend les étapes suivantes :

- Acquisition d'une distance entre l'aéronef et un obstacle sur la trajectoire de l'aéronef et d'un temps avant collision de l'aéronef avec l'obstacle à partir d'images de l'obstacle obtenues par la caméra,

- Estimation d'au moins une vitesse radiale de l'obstacle en utilisant un filtre de Kalman étendu prenant en entrée ladite distance et ledit temps avant collision de l'aéronef avec l'obstacle,

- Modification de la trajectoire de l'aéronef par le système de guidage, en fonction de la valeur de vitesse radiale estimée de l'obstacle et de la distance entre l'aéronef et l'obstacle de manière à éviter une collision de l'aéronef avec l'obstacle.

La présente invention utilise directement le temps avant collision de l'aéronef avec l'obstacle ainsi que la distance entre l'obstacle et l'aéronef pour obtenir, via un filtre de Kalman étendu (abrégé KEF, ou « EKF » de l'anglais « Extended Kalman Filter ») une vitesse radiale plus précise. Cette façon de procéder diminue la contrainte en distance autrement nécessaire si la vitesse radiale était obtenue par un autre moyen, comme dans l'art antérieur. De plus, l'invention permet d'utiliser un système optronique en le rendant plus pertinent pour réaliser une fonction de « détection et évitement » grâce à une obtention de vitesse radiale avec de bonnes performances, c'est-à-dire une vitesse radiale estimée plus proche de la vitesse radiale réelle de l'obstacle que dans l'art antérieur. Enfin, grâce à l'invention, la décision de modification de trajectoire est plus fiable et/ou plus précise en tenant compte de la vitesse radiale. La fiabilité et/ou précision de l'invention est bien sûr d'autant plus importante lorsque la vitesse radiale est précise. Typiquement, la vitesse radiale peut être mesurée en radar par filtrage doppler. Sa variation peut être observée plus tôt que la variation de distance que l'on va avoir lorsque la cible manœuvre, ce qui est un bon indicateur de début de manœuvre.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :

- le filtre de Kalman étendu comprend un vecteur de mesure et un vecteur d'état, le vecteur de mesure comprenant la distance entre l'aéronef et l'obstacle et l'inverse du temps avant collision de l'aéronef avec l'obstacle, le vecteur d'état comprenant la distance entre l'aéronef et l'obstacle et la vitesse radiale de l'obstacle par rapport à l'aéronef.

- la distance entre l'aéronef et l'obstacle est obtenue par un procédé d'apprentissage automatique basé sur une analyse d'images, les images ayant été obtenues par une caméra embarquée dans l'aéronef.

- le temps avant collision de l'aéronef avec l'obstacle est obtenu par un procédé d'apprentissage automatique basé sur une analyse d'images, les images ayant été obtenues par une caméra embarquée dans l'aéronef.

- la vitesse radiale est obtenue par utilisation d'une pluralité de filtres de Kalman étendus, chaque filtre de Kalman étendu de la pluralité de filtres de Kalman étendus modélisant un régime cinématique de l'obstacle parmi une pluralité de régimes cinématiques de l'obstacle, le régime cinématique modélisé par chaque filtre de Kalman étendu de la pluralité de filtres de Kalman étendus étant différent du régime cinématique modélisé par les autres filtres de Kalman étendus de la pluralité de filtres de Kalman étendus.

- chaque filtre de Kalman étendu de la pluralité de filtres de Kalman étendus comprend un vecteur d'état représentatif du régime cinématique modélisé par le filtre de Kalman étendu pondéré par une probabilité de réalisation du régime cinématique, la vitesse radiale étant comprise dans un vecteur d'état étant le barycentre des vecteurs d'états des filtres de Kalman étendus de la pluralité de filtres de Kalman étendus.

Un autre aspect de l'invention concerne un aéronef configuré pour mettre en œuvre le procédé de contrôle d'aéronef selon l'invention, l'aéronef comprenant au moins une caméra et un système de guidage configuré pour indiquer une trajectoire à l'aéronef.

Un autre aspect de l'invention concerne un produit programme d'ordinateur comprenant des instructions qui, lorsque le programme est exécuté par un ordinateur, conduisent celui-ci à mettre en œuvre le procédé de contrôle d'un aéronef selon l'invention.

Un autre aspect de l'invention concerne un support d'enregistrement lisible par ordinateur comprenant des instructions qui, lorsqu'elles sont exécutées par un ordinateur, conduisent celui-ci à mettre en œuvre le procédé de contrôle d'un aéronef selon l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique d'un système comprenant un obstacle et un aéronef configuré pour estimer la vitesse radiale selon l'invention,

- La figure 2 montre une représentation schématique d'un filtre de Kalman étendu multi-modèles d'un mode de réalisation de l'invention,

- La figure 3 montre une représentation schématique d'un procédé de contrôle d'un aéronef selon l'invention,

- Les Figures 4A à 4C montrent des représentations graphiques de résultats pour un filtre de Kalman étendu modélisant un régime cinématique non-manœuvrant de l'obstacle O avec la distance D seule comprise dans le vecteur de mesure du filtre de Kalman étendu,

- Les Figures 5A à 5C montrent des représentations graphiques de résultats pour un filtre de Kalman étendu modélisant un régime cinématique non-manœuvrant de l'obstacle O avec la distance D et le temps avant collision TAC comprise dans le vecteur de mesure du filtre de Kalman étendu,

- Les Figures 6A à 6D montrent des représentations graphiques de résultats pour un filtre de Kalman étendu multi-modèles avec la distance D et le temps avant collision TAC comprise dans le vecteur de mesure du filtre de Kalman étendu.

## DESCRIPTION DETAILLEE

Sauf précision contraire, un même élément apparaissant sur des figures différentes présente une référence unique.

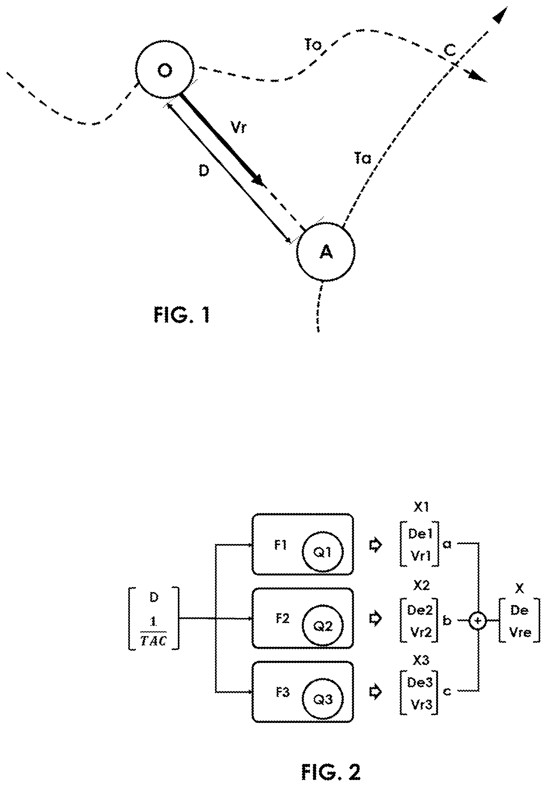

La figure 1 montre une représentation schématique d'un système comprenant un obstacle et un aéronef configuré pour mettre en œuvre le procédé selon l'invention. L'obstacle O représenté à la Figure 1 suit une trajectoire To. L'aéronef A représenté à la Figure 1 suit une trajectoire Ta. Préférentiellement, la trajectoire Ta est déterminée par un système de guidage embarqué dans l'aéronef A, c'est-à-dire que le système de guidage détermine une trajectoire en fonction d'informations de configuration et/ou d'un procédé de détermination de trajectoire, par exemple en fonction d'un point de départ, d'un point d'arrivée, et de paramètres. De tels paramètres peuvent être des tâches à réaliser, des étapes, des objectifs, une vitesse moyenne entre le départ et l'arrivée, une durée de trajectoire. La trajectoire Ta de l'aéronef A peut comprendre des périodes sans mouvement de l'aéronef A.

Un aéronef est un dispositif de transport volant capable de se mouvoir dans les airs. Par « transport » on entend capable de transporter au moins un être humain ou au moins un objet, par exemple une caméra, un colis, un processeur ou tout autre objet. L'aéronef A peut être un aéronef sans pilote, par exemple un drone, notamment un drone de taille moyenne, ou un aéronef avec pilote, par exemple, mais non limitativement, un planeur, un planeur ultra-léger motorisé (aussi appelé « ULM »), un hélicoptère ou encore un avion de tourisme, notamment un avion monomoteur ou bimoteur. L'aéronef A comprend un processeur, par exemple dans un ordinateur de bord, configuré pour estimer la vitesse radiale Vr de l'obstacle O, qui sera décrit dans la suite de la description et/ou un procédé de contrôle de l'aéronef A en fonction de la vitesse radiale Vr estimée de l'obstacle O qui sera également décrit dans la suite de la description. Le procédé selon l'invention est mis en œuvre par le processeur en exécutant des instructions, stockées sur une mémoire, distante ou comprise dans l'aéronef A. L'exécution des instructions par le processeur conduit le processeur à mettre en œuvre le procédé de contrôle de l'aéronef A selon l'invention.

Un obstacle O de l'aéronef A est un objet se situant ou destiné à se situer sur la trajectoire Ta de l'aéronef A, c'est-à-dire que la trajectoire To de l'obstacle O croise à un instant t la trajectoire Ta de l'aéronef en un point de collision C. Lorsque l'aéronef A n'est pas en mouvement, c'est-à-dire lorsqu'il est statique, un obstacle O est un objet dont la trajectoire To passe par l'aéronef A. Un objet qui ne croise jamais l'aéronef A peut être considéré comme étant un obstacle O par l'aéronef A s'il existe un risque que l'objet entre en collision avec l'aéronef A. L'aéronef A peut être configuré pour considérer que chaque intrus, c'est-à-dire chaque objet entrant dans son champ de vision, présente un risque d'entrer en collision avec l'aéronef A et est donc un obstacle O.

L'invention a pour objectif d'estimer la vitesse radiale Vr de l'obstacle O par rapport à l'aéronef A. L'estimation est réalisée par ordinateur, préférentiellement un ordinateur embarqué dans l'aéronef A. Ainsi, l'invention a pour objet un procédé mis en œuvre par ordinateur. Avec la distance D et la vitesse radiale Vr, il est possible d'éviter une collision de l'aéronef A avec l'obstacle O en modifiant la trajectoire Ta de l'aéronef A par le système de guidage.

La vitesse radiale Vr est la vitesse de l'obstacle O projetée sur un axe d'observation de l'aéronef A, par exemple sur l'axe 1 représenté en pointillés à la Figure 1. L'aéronef A comprend au moins une caméra qui a donc pour fonction d'acquérir des images. La caméra est configurée pour acquérir une pluralité d'images de l'obstacle O. La caméra permet préférentiellement l'acquisition d'images selon une pluralité de longueurs d'onde différentes, par exemple dans le domaine du visible et/ou de l'infrarouge, de préférence dans l'infrarouge semi-lointain et/ou dans l'infrarouge lointain, afin de permettre d'estimer la vitesse radiale Vr selon l'invention quelles que soient les conditions de visibilité, et de permettre une détection nocturne de l'obstacle O.

La distance D est la distance entre l'aéronef A et l'obstacle O. La distance D peut être obtenue, comme décrit dans l'art antérieur, via un procédé d'apprentissage automatique mis en œuvre par l'aéronef A analysant les images obtenues par la caméra. Le procédé d'apprentissage automatique met par exemple en œuvre un réseau de neurones. La distance D est alors fournie par le procédé d'apprentissage automatique à plusieurs instants, réguliers ou non.

Le temps avant collision TAC est le temps avant collision entre l'aéronef A et l'obstacle O suivant chacun leur trajectoire respective Ta et To. Le temps avant collision TAC peut être obtenu par analyse d'images, par exemple par la variation de taille apparente en pixels de l'obstacle O entre images d'une suite d'images de l'obstacle O obtenues par la caméra.

Pour estimer la vitesse radiale Vr, l'invention propose l'utilisation d'un filtre de Kalman étendu, prenant en entrée la distance D entre l'aéronef A et l'obstacle O et le temps avant collision de l'aéronef A avec l'obstacle O. Le filtre de Kalman étendu permet de filtrer la distance et la vitesse radiale Vr, c'est-à-dire que la distance De estimée et la vitesse radiale Vr estimée sont lissées et moins bruitées que dans l'art antérieur. Ainsi, la distance D en entrée du filtre de Kalman étendu peut être imprécise tout en obtenant une vitesse radiale Vr estimée avec de bonnes performances, c'est-à-dire plus précise que dans l'art antérieur. Le filtre de Kalman étendu permet de gérer un espace de mesure $Z = \begin{bmatrix} D \\ \frac{1}{TAC} \end{bmatrix}$ différent de l'espace de filtrage $X = \begin{bmatrix} D \\ Vr \end{bmatrix}$. Comme le temps avant collision peut être obtenu de la façon suivante :

$TAC = -\frac{D}{Vr}$, il y a non-linéarité entre l'espace de mesure et l'espace de filtrage. L'utilisation d'un filtre de Kalman étendu permet de gérer cette non-linéarité.

Le filtre de Kalman étendu comprend un vecteur de mesure dans l'espace de mesure et un vecteur d'état dans

**5**

l'espace de filtrage. Préférentiellement, le vecteur de mesure $Z = \begin{bmatrix} D \\ \frac{1}{TAC} \end{bmatrix}$ comprend la distance D entre l'aéronef A et l'obstacle O et l'inverse du temps avant collision TAC de l'aéronef A avec l'obstacle O. L'inverse du temps avant collision TAC permet d'éviter les problèmes de convergence de filtre quand l'obstacle O a une vitesse radiale Vr nulle. Un obstacle O peut avoir une vitesse radiale Vr nulle par exemple lorsque l'obstacle O est immobile, par exemple une montgolfière. Le vecteur d'état $X = \begin{bmatrix} D \\ Vr \end{bmatrix}$ comprend la distance D entre l'aéronef A et l'obstacle O et la vitesse radiale Vr de l'obstacle O

par rapport à l'aéronef A.

Un filtre de Kalman fonctionne en deux phases : une phase de prédiction et une phase d'estimation. La phase de prédiction utilise le vecteur d'état $X_{k-1}$ à un état précédent, par exemple à l'instant k-1, et cherche à prédire la valeur du vecteur d'état $X_k$ à un état courant, par exemple à l'instant courant k. La phase d'estimation utilise le vecteur de mesure z observé à l'instant courant k pour corriger l'état prédit $x_k$ à l'instant courant k afin d'obtenir une prédiction plus précise.

Le fonctionnement du filtre de Kalman étendu selon l'invention va donc maintenant être décrit.

Phase de prédiction :

La phase de prédiction débute par le calcul du vecteur d'état de passage de l'instant k à l'instant k+1, par exemple avec une image obtenue par la caméra à l'instant k et une deuxième image obtenue par la caméra à l'instant k+1, le vecteur d'état se calcule alors comme suit :

$$X_{k+1/k} = F * X_{k/k}$$

Avec $F = \begin{bmatrix} 1 & dT \\ 0 & 1 \end{bmatrix}$ pour un mouvement à vitesse constant de l'obstacle O, avec dT l'écart temporel entre deux instants (par exemple, à 10Hz, dT = 0.1 seconde).

Avec $X_{k/k} = \begin{bmatrix} D \\ Vr \end{bmatrix}$ le vecteur d'état estimé à l'instant k et $X_{k+1/k} = \begin{bmatrix} D \\ Vr \end{bmatrix}$ : vecteur d'état prédit à l'instant k+1 connaissant l'estimée à l'instant courant k.

A ce vecteur d'état prédit Xk+1/k correspond la matrice de covariance prédite :

$$P_{k+1/k} = F * P_{k/k} * F^T + Q$$

avec $P_{k/k}$ la matrice de covariance estimée en $\begin{bmatrix} D \\ Vr \end{bmatrix}$, $P_{k+1/k}$ la matrice de covariance prédite en $\begin{bmatrix} D \\ Vr \end{bmatrix}$, $F^T$ la

transposée de F, Q la matrice de modélisation du régime cinématique de l'obstacle O. Par exemple, Q peut être exprimée de la façon suivante :

$$Q = \sigma^2 * \begin{bmatrix} \frac{dT^4}{4} & \frac{dT^3}{2} \\ \frac{dT^3}{2} & dT^2 \end{bmatrix}$$

avec $\sigma$ l'incrément en accélération exprimé en m/s$^2$ du régime cinématique de l'obstacle O.

Estimation

Dans la phase d'estimation, car le vecteur de mesures est $Z = \begin{bmatrix} D \\ \frac{1}{TAC} \end{bmatrix}$, le jacobien H doit être calculé, de la façon suivante :

$$H = \left[\frac{dZ}{dX}\right] = \begin{bmatrix} 1 & 0 \\ -\frac{1}{TAC*D} & -\frac{1}{D} \end{bmatrix}$$

Avec la distance D nulle en cas de collision entre l'aéronef A et l'obstacle O.

Ensuite, le vecteur d'état à l'instant k+1 suivant l'instant courant k, comprenant la valeur de vitesse radiale Vr et de distance estimée De, se calcule comme suit :

$$X_{k+1/k+1} = X_{k+1/k} + K_{k+1} * \left(Z_{k+1} - h\left(X_{k+1/k}\right)\right)$$

Et la matrice de covariance associée au vecteur d'état à l'instant k+1 :

$$P_{k+1/k+1} = (I - K_{k+1} * H) * P_{k+1/k}$$

Avec $h(x) = [X_{k+1/k}(1); -\left(\frac{X_{k+1/k}(2)}{X_{k+1/k}(1)}\right)]T$ et $X_{k+1/k}$ le vecteur $\begin{bmatrix} D \\ Vr \end{bmatrix}$.

Avec $K_{k+1}$ le gain de Kalman, calculé en prenant en compte le jacobien H et les bruits de mesure $D(\sigma_D)$ et $\frac{1}{TAC} (\sigma_{\frac{1}{TAC}} = \frac{\sigma_{TAC}}{TAC^2})$.

Le gain de Kalman $K_{k+1}$ est obtenu en calculant tout d'abord la matrice S, comme suit :

$$S = H * P_{k+1/k} * H^T + M$$

avec M la matrice de bruit mesure en $\begin{bmatrix} D \\ \frac{1}{TAC} \end{bmatrix}$ :

$$M = \begin{bmatrix} \sigma_D^2 & 0 \\ 0 & \sigma_{1/TAC}^2 \end{bmatrix}$$

où $\sigma_D^2$ est la covariance de bruit en distance D, et $\sigma_{D1/TAC}^2$ est la covariance de bruit en $\frac{1}{TAC}$ et $\sigma_{1/TAC}^2 = \frac{\sigma_{TAC}^2}{TAC^4}$.

Le gain de Kalman est alors calculé selon :

$$K_{k+1} = P_{k+1/k} * H^T * S^{-1}$$

Le filtre de Kalman étendu fonctionne avec un vecteur d'état initial $X_{0/0}$, c'est-à-dire à un instant initial 0. Selon l'invention, le vecteur d'état initial $X_{0/0}$ est initialisé de la façon suivante :

$$X_{0/0} = \begin{bmatrix} D_0 \\ \frac{-D_0}{TAC_0} \end{bmatrix}$$

Avec $D_0$ une distance initiale correspondant à la première distance obtenue par analyse d'images, et $TAC_0$ un temps avant collision initial correspondant au premier temps avant collision obtenu par analyse d'images.

La matrice de covariance associée au vecteur d'état initial est :

$$P_{0/0} = \begin{bmatrix} \sigma_D^2 & B \\ B & A \end{bmatrix}$$

avec :

$$B = -\frac{\sigma_D^2}{TAC_0}$$

Et

$$A = \frac{\sigma_D^2}{TAC_0^2} + \frac{D_0^2 * \sigma_{TAC}^2}{TAC^4}$$

Le temps avant collision TAC et la distance D étant considérés comme étant deux mesures décorrélées obtenues au même instant.

La prise en compte du temps avant collision TAC dès l'initialisation du filtre entraine une meilleure convergence du filtre de Kalman.

L'invention porte aussi sur un filtre de Kalman étendu permettant de gérer les cas dans lesquels seule une mesure du temps avant collision TAC a été réalisée pour l'instant courant k. Dans un tel cas, le filtre de Kalman étendu utilise la mesure de distance D la plus récente à laquelle il a accès, par exemple car les mesures en distance D sont stockées dans une mémoire, par exemple la mesure de distance D réalisée à l'instant précédent k-1, mémorisé dans le vecteur d'état.

Dans un mode de réalisation, l'estimation de vitesse radiale Vr de l'obstacle O par rapport à l'aéronef A est réalisée en utilisant plusieurs filtres de Kalman étendu, que l'on peut aussi considérer comme étant un filtre de Kalman étendu multi-modèles. Dans ce mode de réalisation, une pluralité de filtres de Kalman étendus modélisent chacun un régime cinématique différent de l'obstacle O. On entend par « un filtre Kalman étendu modélise un régime cinématique » le fait que le filtre de Kalman étendu prenne en compte, dans la matrice Q de modélisation de régime cinématique, un régime cinématique particulier de l'obstacle O. Par exemple, comme représenté à la Figure 2, si la pluralité de filtres de Kalman étendus comprend trois filtres de Kalman étendus, un premier filtre de Kalman étendu F1 peut modéliser via la matrice Q1 un régime cinématique correspondant à un obstacle O non manœuvrant par rapport à l'aéronef A, c'est-à-dire un obstacle O immobile par rapport à l'aéronef A, un deuxième filtre de Kalman étendu F2 peut modéliser via la matrice Q2 un régime cinématique correspondant à un obstacle O manœuvrant en distance par rapport à l'aéronef A, et un troisième filtre de Kalman étendu F3 peut modéliser via la matrice Q3 un régime cinématique correspondant à un obstacle O très manœuvrant en distance par rapport à l'aéronef A, c'est-à-dire un obstacle O ayant de nombreux mouvements.

Dans un tel cas, c'est-à-dire dans le mode de réalisation multi-modèles, chaque filtre de Kalman étendu prend en entrée le même vecteur de mesure $Z = \begin{bmatrix} D \\ \frac{1}{TAC} \end{bmatrix}$. C'est le cas des trois filtres F1 à F3 de la Figure 2. Chaque filtre F1 à F3 comprend respectivement une matrice Q1 à Q3 de modélisation de régime cinématique, chaque matrice Q1 à Q3 modélisant un régime cinématique de l'obstacle O différent des autres régimes cinématiques. Chaque filtre F1 à F3, à chaque instant, fournit en sortie un vecteur d'état respectivement X1 à X3 de l'instant courant. Chaque vecteur d'état X1 à X3 comprend une estimation de la vitesse radiale Vr1 à Vr3 de l'obstacle O par rapport à l'aéronef A, modélisée selon le régime cinématique correspondant dans les matrices Q1 à Q3. Le vecteur d'état X résultant du filtre multi-modèles est alors le barycentre des vecteurs d'état X1 à X3 pondérés par une probabilité de réalisation du régime cinématique par l'obstacle O. La probabilité associée à chaque vecteur X1 à X3 est notée a, b et c respectivement. Les probabilités a à c sont les probabilités que l'obstacle O réalise des manœuvres se situant dans le régime cinématique représenté par la matrice respectivement Q1 à Q3.

Le vecteur d'état estimé Xk/k est alors le barycentre des vecteur d'état Xik/k des filtres F1 à F3 pondérés par leur probabilité de réalisation Pri :

$$\text{Xk/k} = \sum_{i=1}^{3} X_{k/k}^{i} * Pr_i$$

La matrice de covariance associée est :

$$\text{Pk/k} = \sum_{i=1}^{3} P_{k/k}^{i} * Pr_i + \sum_{i=1}^{3}(X_{k/k} - X_{k/k}^{i}) * (X_{k/k} - X_{k/k}^{i})^{t} * Pr_i =$$

$$\sum_{i=1}^{3}(P_{k/k}^{i} + (X_{k/k} - X_{k/k}^{i}) * (X_{k/k} - X_{k/k}^{i})^{t}) * Pr_i$$

Pri à l'instant k+1 suivant l'instant courant k est mis à jour à chaque mesure comme suit en utilisant la probabilité de réalisation du même régime cinématique à l'instant courant k :

$$\text{Pri(k+1)} \propto \text{Pri(k)} * e^{-\frac{d^2}{2}}$$ avec d2 l'innovation normalisée du filtre correspondant au régime cinématique où $d^2 = [(Zk+1 - h(Xk+1/k))T*S-1*((Zk+1 - h(Xk+1/k)].$

L'invention permet, dans le mode de réalisation multi-modèles, une prise en compte des différentes capacités de déplacement de l'obstacle O. Les différents régimes cinématiques peuvent être prévus par configuration, par exemple stockés dans un fichier. Les probabilités de réalisation des régimes cinématiques peuvent aussi être stockées dans un fichier. Enfin, les régimes cinématiques peuvent être liés à un type d'obstacle O. Le type d'obstacle O peut être détecté par analyse d'image, et les différents régimes cinématiques associés à ce type d'obstacle O peuvent alors être récupérés et utilisés dans un filtre de Kalman multi-modèles, permettant une meilleure précision de la vitesse radiale Vr.

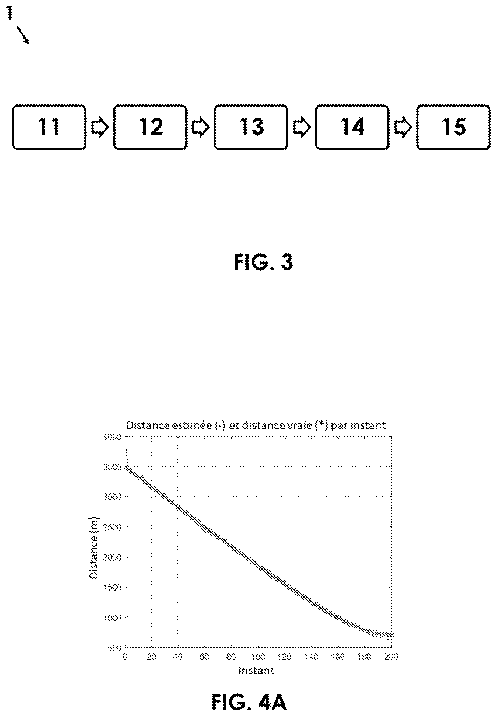

Un autre aspect de l'invention porte sur un procédé 1 de contrôle de l'aéronef A représenté à la Figure 3. Le procédé 1 comprend trois étapes :

- Une première étape 11 d'acquisition d'une distance D entre l'aéronef A et l'obstacle O et d'un temps avant collision TAC de l'aéronef A avec l'obstacle O à partir d'images de l'obstacle O obtenues par la caméra. Cette étape 11 est réalisée par la caméra de l'aéronef A.

- Un deuxième étape 12 d'estimation de la vitesse radiale Vr de l'obstacle O en utilisant un filtre de Kalman étendu prenant en entrée la distance D entre l'aéronef A et l'obstacle O et le temps avant collision de l'aéronef A avec l'obstacle O, tel que présenté précédemment. Cette estimation est par exemple mise en œuvre par un processeur compris dans l'aéronef A, à partir de la distance D et du temps avant collision TAC acquis à l'étape 11, fournis en entrée du filtre de Kalman étendu, à modèle unique ou multi-modèles.

- Une troisième étape 13 de modification de la trajectoire Ta de l'aéronef A par le système de guidage de l'aéronef A, en fonction de la valeur de vitesse radiale Vr estimée de l'obstacle O et de la distance estimée De entre l'aéronef A et l'obstacle O afin d'éviter une collision de l'aéronef A avec l'obstacle O. La vitesse radiale Vr et la distance estimée De sont les informations contenues dans le vecteur d'état en sortie du filtre de Kalman étendu à chaque instant.

Pour illustrer les gains obtenus par l'invention en termes de performances sur la distance D et la vitesse radiale Vr, le tableau suivant présente une comparaison de l'invention avec un filtre de Kalman prenant en entrée la distance D seule. Les cas 1 et 2 montrent les résultats obtenus sans biais en distance D avec une erreur en distance de 40% (+/- 20% par rapport à la distance vraie) respectivement par l'invention et par un filtre de Kalman avec la distance D en entrée seule. Les cas 3 et 4 montrent les résultats obtenus par l'invention avec un biais de 10% en distance D et une erreur en distance D de 20% (+/- 10% par rapport à la distance vraie) respectivement par l'invention et par un filtre de Kalman avec la distance D en entrée seule.

[Tableau 1]

| | Filtre de KALMAN 'D+TTG' (CAS 1) Situation : *Pas de biais en distance *Erreur en distance : 40% (±20% par rapport à donnée vraie) | Filtre de KALMAN 'D' (CAS 2) Situation : *Pas de biais en distance *Erreur en distance : 40% (±20% par rapport à donnée vraie) | Filtre de KALMAN 'D+TTG' (CAS 3) Situation : *biais en distance de 10% *Erreur en distance : 20% (±10% par rapport à donnée vraie) | Filtre de KALMAN 'D' (CAS 4) Situation : *biais en distance de 10% *Erreur en distance : 20% (±10% par rapport à donnée vraie) |
|---|---|---|---|---|
| Erreur en distance estimée (m) | -13.6 ± 139.6 | -12.90 ± 200.7 | -204.28 ± 131.3 | -201.00 ± 140.3 |
| % erreur en distance estimée | 0.12 ± 7.6 | 0.22 ± 10.50 | 10.41 ± 4.5 | 10.25 ± 5.2 |
| Erreur en vitesse radiale (m/s) | 1.11 ± 12.2 | 29.65 ± 191.8 | 13.11 ± 12.2 | 27.39 ± 90.1 |
| % Erreur en vitesse radiale en sortie Kalman | 0.63 ± 9.4 | 26.58 ± 211.9 | 9.51 ± 8.5 | 31.56 ± 114.2 |
| % Erreur en vitesse radiale en combinant TTG & distance IA | 3.15 ± 20.7 | 3.07 ± 19.9 | 12.90 ± 18.1 | 12.88 ± 17.6 |

Le tableau 1 montre des erreurs vitesse radiale Vr en sortie de filtre de Kalman étendu bien inférieures pour les cas 1 et 3 par rapport respectivement aux cas 2 et 4.

Les figures 4A, 4B et 4C, 5A, 5B et 5C et 6A, 6B, 6C et 6D montrent des graphiques représentant des métriques relatives aux performances de l'invention par instant. Chaque métrique est représentée graphiquement par instant, c'est-à-dire par exemple par image, les instants 0 à 200 correspondant aux images 0 à 200 captées par la caméra. Alternativement, un instant peut être un instant auquel une distance est obtenue en sortie du filtre de Kalman étendu.

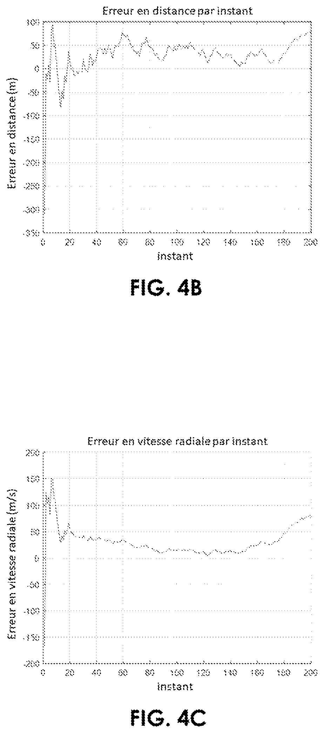

Les Figure 4A, Figure 4B et Figure 4C montrent respectivement la distance estimée De en mètres, les erreurs en distance estimée De en mètres et les erreurs en vitesse radiale Vr en mètres par seconde par instant pour un filtre de Kalman étendu modélisant un régime cinématique non-manœuvrant de l'obstacle O avec la distance D seule comprise dans le vecteur de mesure du filtre de Kalman étendu.

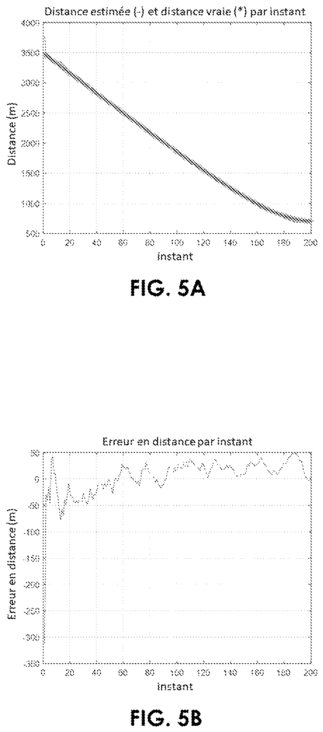

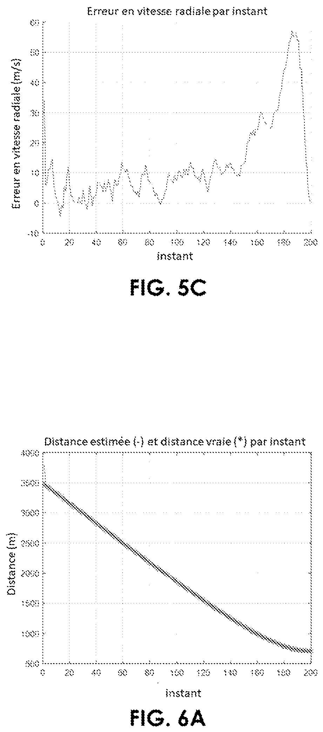

Les Figure 5A, Figure 5B et Figure 5C montrent respectivement la distance estimée De en mètres, les erreurs en distance estimée De en mètres et les erreurs en vitesse radiale Vr en mètres par seconde par instant pour un filtre de Kalman étendu modélisant un régime cinématique non-manœuvrant de l'obstacle O avec la distance D et le temps avant collision TAC comprise dans le vecteur de mesure du filtre de Kalman étendu.

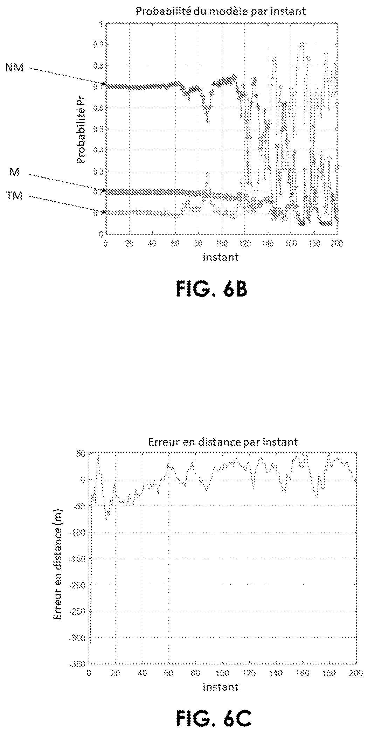

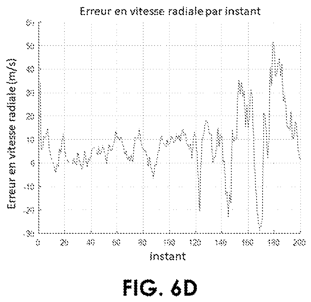

Les Figure 6A, Figure 6B, Figure 6C et Figure 6D montrent respectivement la distance estimée De en mètres, la probabilité de réalisation de chaque modèle, les erreurs en distance estimée De en mètres et les erreurs en vitesse radiale Vr en mètres par seconde par instant pour un filtre de Kalman étendu multi-modèles avec la distance D et le temps avant collision TAC compris dans le vecteur de mesure du filtre de Kalman étendu.

La distance estimée De aux figures 4A, 5A et 6A est représentée par une ligne continue et la distance vraie est représentée par des points en forme d'étoile.

La probabilité de réalisation Pr représentée à la Figure 6B est représentée par des points sous forme de pentagone pour une modélisation du régime cinématique très manœuvrant TM, par des points sous forme de rond pour une modélisation du régime cinématique manœuvrant M et par des points sous forme d'étoile pour une modélisation du régime cinématique non manœuvrant NM.

**Revendications**

1.  Procédé (1) de contrôle d'un aéronef (A) comprenant au moins une caméra et un système de guidage configuré pour indiquer une trajectoire (Ta) à l'aéronef (A), le procédé (1) étant mis en œuvre par ordinateur et étant **caractérisé en ce qu'**il comprend les étapes suivantes :

- Acquisition (11) d'une distance (D) entre l'aéronef (A) et un obstacle (O) sur la trajectoire (Ta) de l'aéronef (A) et d'un temps avant collision de l'aéronef (A) avec l'obstacle (O) à partir d'images de l'obstacle (O) obtenues par la caméra,

- Estimation (12) d'au moins une vitesse radiale (Vr) de l'obstacle (O) en utilisant un filtre de Kalman étendu prenant en entrée ladite distance (D) et ledit temps avant collision de l'aéronef (A) avec l'obstacle (O),

- Modification (13) de la trajectoire (Ta) de l'aéronef (A) par le système de guidage, en fonction de la valeur de vitesse radiale (Vr) estimée de l'obstacle (O) et de la distance (D) entre l'aéronef (A) et l'obstacle (O) de manière à éviter une collision de l'aéronef (A) avec l'obstacle (O).

2. Procédé (1) selon la revendication précédente selon lequel le filtre de Kalman étendu comprend un vecteur de mesure et un vecteur d'état, le vecteur de mesure comprenant la distance (D) entre l'aéronef (A) et l'obstacle (O) et l'inverse du temps avant collision de l'aéronef (A) avec l'obstacle (O) et le vecteur d'état comprenant la distance (D) entre l'aéronef (A) et l'obstacle (O) et la vitesse radiale (Vr) de l'obstacle (O) par rapport à l'aéronef (A).

3. Procédé (1) selon l'une quelconque des revendications précédentes selon lequel la distance (D) de l'aéronef (A) avec l'obstacle (O) est obtenue par un procédé d'apprentissage automatique basé sur une analyse d'images, les images ayant été obtenues par une caméra embarquée dans l'aéronef (A).

4. Procédé (1) selon l'une quelconque des revendications précédentes selon lequel le temps avant collision de l'aéronef (A) avec l'obstacle (O) est obtenu par un procédé d'apprentissage automatique basé sur une analyse d'images, les images ayant été obtenues par une caméra embarquée dans l'aéronef (A).

5. Procédé (1) selon l'une quelconque des revendications précédentes selon lequel la vitesse radiale (Vr) est obtenue par utilisation d'une pluralité de filtres de Kalman étendus, chaque filtre de Kalman étendu de la pluralité de filtres de Kalman étendus modélisant un régime cinématique de l'obstacle (O) par rapport à l'aéronef (A) parmi une pluralité de régimes cinématiques de l'obstacle (O) par rapport à l'aéronef (A), le régime cinématique modélisé par chaque filtre de Kalman étendu de la pluralité de filtres de Kalman étendus étant différent du régime cinématique modélisé par les autres filtres de Kalman étendus de la pluralité de filtres de Kalman étendus.

6. Procédé (1) selon les revendications 2 et 5 selon lequel chaque filtre de Kalman étendu de la pluralité de filtres de Kalman étendus comprend un vecteur d'état représentatif du régime cinématique modélisé par le filtre de Kalman étendu pondéré par une probabilité de réalisation du régime cinématique, la vitesse radiale (Vr) étant comprise dans un vecteur d'état étant le barycentre des vecteurs d'états des filtres de Kalman étendus de la pluralité de filtres de Kalman étendus.

7. Aéronef (A) configuré pour mettre en œuvre le procédé selon l'une quelconque des revendications précédentes, l'aéronef (A) comprenant au moins une caméra et un système de guidage configuré pour indiquer une trajectoire à l'aéronef (A).

8. Produit programme d'ordinateur comprenant des instructions qui, lorsque le programme est exécuté par un ordinateur, conduisent celui-ci à mettre en œuvre le procédé (1) de contrôle selon l'une quelconque des revendications 1 à 6.

9. Support d'enregistrement lisible par ordinateur comprenant des instructions qui, lorsqu'elles sont exécutées par un ordinateur, conduisent celui-ci à mettre en œuvre le procédé (1) de contrôle selon l'une quelconque des revendications 1 à 6.

**Patentansprüche**

1. Verfahren (1) zur Steuerung eines Flugzeugs (A) mit mindestens einer Kamera und einem Leitsystem, das so konfiguriert ist, dass es dem Flugzeug (A) eine Flugbahn (Ta) angibt, wobei das Verfahren (1) computergesteuert ist und sich durch die folgenden Schritte auszeichnet:

- Erfassen (11) einer Entfernung (D) zwischen dem Flugzeug (A) und einem Hindernis (O) auf der Flugbahn (Ta) des Flugzeugs (A) und einer Zeit bis zur Kollision des Flugzeugs (A) mit dem Hindernis (O) anhand von Bildern des Hindernisses (O), die von der Kamera aufgenommen wurden,

- Schätzen (12) mindestens einer Radialgeschwindigkeit (Vr) des Hindernisses (O) unter Verwendung eines erweiterten Kalman-Filters, der die Entfernung (D) und die Zeit bis zur Kollision des Flugzeugs (A) mit dem Hindernis (O) als Eingabe verwendet,
- Ändern (13) der Flugbahn (Ta) des Flugzeugs (A) durch das Leitsystem in Abhängigkeit von dem geschätzten Wert der Radialgeschwindigkeit (Vr) des Hindernisses (O) und der Entfernung (D) zwischen dem Flugzeug (A) und dem Hindernis (O), sodass eine Kollision des Flugzeugs (A) mit dem Hindernis (O) vermieden wird.

2. Verfahren (1) nach dem vorhergehenden Anspruch, bei dem der erweiterte Kalman-Filter einen Messvektor und einen Zustandsvektor umfasst, wobei der Messvektor den Abstand (D) zwischen dem Flugzeug (A) und dem Hindernis (O) und den Kehrwert der Zeit bis zur Kollision des Flugzeugs (A) mit dem Hindernis (O) umfasst und der Zustandsvektor den Abstand (D) zwischen dem Flugzeug (A) und dem Hindernis (O) und die Radialgeschwindigkeit (Vr) des Hindernisses (O) relativ zum Flugzeug (A) umfasst.

3. Verfahren (1) nach einem der vorhergehenden Ansprüche, bei dem der Abstand (D) des Flugzeugs (A) zum Hindernis (O) durch ein automatisches Lernverfahren auf der Grundlage einer Bildanalyse ermittelt wird, wobei die Bilder von einer im Flugzeug (A) eingebauten Kamera aufgenommen wurden.

4. Verfahren (1) nach einem der vorhergehenden Ansprüche, bei dem die Zeit bis zur Kollision des Flugzeugs (A) mit dem Hindernis (O) durch ein automatisches Lernverfahren auf der Grundlage einer Bildanalyse ermittelt wird, wobei die Bilder von einer im Flugzeug (A) eingebauten Kamera aufgenommen wurden.

5. Verfahren (1) nach einem der vorhergehenden Ansprüche, bei dem die Radialgeschwindigkeit (Vr) unter Verwendung einer Vielzahl von erweiterten Kalman-Filtern ermittelt wird, wobei jeder erweiterte Kalman-Filter der mehreren erweiterten Kalman-Filter einen kinematischen Zustand des Hindernisses (O) relativ zum Flugzeug (A) aus einer Vielzahl von kinematischen Zuständen des Hindernisses (O) relativ zum Flugzeug (A) modelliert, wobei sich der von jedem erweiterten Kalman-Filter der Vielzahl von erweiterten Kalman-Filtern modellierte kinematische Zustand von dem von den anderen erweiterten Kalman-Filtern der Vielzahl von erweiterten Kalman-Filtern modellierten kinematischen Zustand unterscheidet.

6. Verfahren (1) nach den Ansprüchen 2 und 5, bei dem jeder erweiterte Kalman-Filter aus der Vielzahl von erweiterten Kalman-Filtern einen Zustandsvektor umfasst, der den durch den erweiterten Kalman-Filter modellierten kinematischen Zustand repräsentiert, gewichtet mit einer Wahrscheinlichkeit der Realisierung des kinematischen Zustands, wobei die Radialgeschwindigkeit (Vr) in einem Zustandsvektor enthalten ist, der das Baryzentrum der Zustandsvektoren der erweiterten Kalman-Filter der Vielzahl von erweiterten Kalman-Filtern ist.

7. Flugzeug (A), das zur Durchführung des Verfahrens nach einem der vorhergehenden Ansprüche konfiguriert ist, wobei das Flugzeug (A) mindestens eine Kamera und ein Leitsystem umfasst, das zur Angabe einer Flugbahn an das Flugzeug (A) konfiguriert ist.

8. Computerprogrammprodukt, das Befehle umfasst, die, wenn das Programm von einem Computer ausgeführt wird, diesen dazu veranlassen, das Steuerungsverfahren (1) gemäß einem der Ansprüche 1 bis 6 durchzuführen.

9. Computerlesbares Aufzeichnungsmedium mit Befehlen, die, wenn sie von einem Computer ausgeführt werden, diesen veranlassen, das Steuerungsverfahren (1) gemäß einem der Ansprüche 1 bis 6 auszuführen.

**Claims**

1. A method (1) for controlling an aircraft (A) comprising at least one camera and a guidance system configured to indicate a trajectory (Ta) to the aircraft (A), the method (1) being computer-implemented and being **characterised in that** it comprises the following steps of:

   - Acquiring (11) a distance (O) between the aircraft (A) and an obstacle (O) on the trajectory (Ta) of the aircraft (A) and a time-to-collision of the aircraft (A) with the obstacle (O) from images of the obstacle (O) obtained by the camera,
   - Estimating (12) at least one radial speed (Vr) of the obstacle (O) using an extended Kalman filter taking as an input said distance (D) and said time-to-collision of the aircraft (A) with the obstacle (O),
   - Modifying (13) the trajectory (Ta) of the aircraft (A) by the guidance system, as a function of the radial speed value (Vr) estimated of the obstacle (O) and the distance (O) between the aircraft (A) and the obstacle (O) so as to avoid collision of the aircraft (A) with the obstacle (O).

2. The method (1) according to the preceding claim, wherein the extended Kalman filter comprises a measurement vector and a state vector, the measurement vector comprising the distance (D) between the aircraft (A) and the obstacle (O) and the inverse of the time-to-collision of the aircraft (A) with the obstacle (O) and the state vector comprising the distance (D) between the aircraft (A) and the obstacle (O) and the radial speed (Vr) of the obstacle (O) relative to the aircraft (A).

3. The method (1) according to any of the preceding claims, wherein the distance (D) of the aircraft (A) from the obstacle (O) is obtained by an automatic learning method based on image analysis, the images having been obtained by a camera on board the aircraft (A).

4. The method (1) according to any of the preceding claims, wherein the time-to-collision of the aircraft (A) with the obstacle (O) is obtained by an automatic learning method based on image analysis, the images having been obtained by a camera on board the aircraft (A).

5. The method (1) according to any of the preceding claims, wherein the radial speed (Vr) is obtained using a plurality of extended Kalman filters, each extended Kalman filter of the plurality of extended Kalman filters modelling one kinematic regime of the obstacle (O) relative to the aircraft (A) from a plurality of kinematic regimes of the obstacle (O) relative to the aircraft (A), the kinematic regime modelled by each extended Kalman filter of the plurality of extended Kalman filters being different from the kinematic regime modelled by the other extended Kalman filters of the plurality of extended Kalman filters.

6. The method (1) according to claims 2 and 5, wherein each extended Kalman filter of the plurality of extended Kalman filters comprises a state vector representative of the kinematic regime modelled by the extended Kalman filter weighted by a probability of occurrence of the kinematic regime, the radial speed (Vr) being included in a state vector being the barycentre of the state vectors of the extended Kalman filters of the plurality of extended Kalman filters.

7. An aircraft (A) configured to implement the method according to any of the preceding claims, the aircraft (A) comprising at least one camera and a guidance system configured to indicate a trajectory to the aircraft (A).

8. A computer program product comprising instructions which, when the program is executed by a computer, cause the same to implement the control method (1) according to any of claims 1 to 6.

9. A computer-readable recording medium comprising instructions which, when executed by a computer, cause the same to implement the control method (1) according to any of claims 1 to 6.

FIG. 1

FIG. 2

1

FIG. 3

Distance estimée (-) et distance vraie (*) par instant

FIG. 4A

FIG. 4B

FIG. 4C

Distance estimée (-) et distance vraie (*) par instant

**FIG. 5A**

Erreur en distance par instant

**FIG. 5B**

Erreur en vitesse radiale par instant

**FIG. 5C**

Distance estimée (-) et distance vraie (*) par instant

**FIG. 6A**

Probabilité du modèle par instant

NM

M

TM

**FIG. 6B**

Erreur en distance par instant

**FIG. 6C**

FIG. 6D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3094081 A1

- EP 2159779 A1

**Littérature non-brevet citée dans la description**

- **V.J. AIDALA** ; **S.E. HAMMEL**. Utilization of modified polar coordinates for bearings-only tracking. IEEE, 2007, 741-752
- **R. KARLSSON** ; **F. GUSTAFSSON**. Recursive Bayesian Estimation - Bearings-only Applications. IEEE, November 2005

- **DOMINIQUE MALTESE** ; **JULIEN FARJON**. Detect and avoid function for UAVs: presentation of an EO/IR sensor solution. *Proc. SPIE 11407, Infrared Technology and Applications XLVI*, 15 May 2020, vol. 1140713, https://doi.org/10.1117/12.2559461